# EUROPEAN PATENT APPLICATION

(11) **EP 4 589 871 A1**
(43) Date of publication of application: **23.07.2025**
(21) Application number: 23867336.2
(22) Date of filing: 12.09.2023
(51) Int. Cl.: H04L 1/00

(54) **COMMUNICATION CONTROL METHOD, OLT, ONU, AND COMPUTER-READABLE MEDIUM**

(30) Priority: 20.09.2022 CN 202211145102
(71) Applicant: ZTE CORPORATION, Shenzhen, Guangdong 518057 (CN)
(72) Inventor: WANG, Peng, Shenzhen, Guangdong 518057 (CN); YUAN, Liquan, Shenzhen, Guangdong 518057 (CN); ZHANG, Weiliang, Shenzhen, Guangdong 518057 (CN); JIANG, Yi, Shenzhen, Guangdong 518057 (CN)
(74) Representative: Canzler & Bergmeier Patentanwälte Partnerschaft mbB
(86) International application number: PCT/CN2023/118156
(87) International publication number: WO 2024/061047

(57) **Abstract**

Provided in the present disclosure is a communication control method used in an OLT. The method comprises: receiving an FEC code pattern capability set reported by an ONU; according to the FEC code pattern capability set, issuing a binding policy to the ONU, the binding policy representing the binding relationship between an FEC code pattern in the FEC code pattern capability set and a burst configuration file index; and instructing the ONU to perform FEC code pattern switching. Further provided in the present disclosure is a communication control method used in the ONU, comprising reporting the FEC code pattern capability set; receiving the binding policy issued by the OLT; and performing FEC code pattern switching according to the instruction of the OLT. Further provided in the present disclosure are an OLT, an ONU and a computer-readable medium.

## Description

### TECHNICAL FIELD

The present disclosure relates to the technical field of communications, and in particular, to a communication control method applied to an Optical Line Terminal (OLT), a communication control method applied to an Optical Network Unit (ONU), an OLT, an ONU, and a computer-readable medium.

### BACKGROUND

In a Passive Optical Network (PON) system, PON devices can be classified into Gigabit-capable Passive Optical Network (GPON) devices, 10-Gigabit-capable Passive Optical Network (XGPON) devices, 10-Gigabit-capable Symmetric Passive Optical Network (XGSPON) devices, 50-Gigabit-capable Higher Speed Passive Optical Network (HSPON) devices, and future 100GPON and 200GPON devices according to different Transmission Convergence (TC) layer protocols. These PON system architectures generally include an OLT, an ONU, and an Optical Distribution Network (ODN), with the OLT serving as a central office and the ONU serving as customer premises equipment

In the PON system, Forward Error Correction (FEC) is configured to improve receiving sensitivities of upstream and downstream optical links, and usually occupies certain upstream and downstream bandwidth resources of PON interfaces.

**Table 1**

| | Upstream control | Upstream algorithm | Downstream control | Downstream algorithm |
|---|---|---|---|---|
| GPON | Controllable | RS(255,239) | Controllable | RS(255,239) |
| XGPON | Controllable | RS(248,232) | Mandatory enabled | RS(248,216) |
| XGSPON | Controllable | RS(248, 216) | Mandatory enabled | RS(248,216) |
| 50GPON | Controllable | LDPC(17280,14592) | Mandatory enabled | LDPC(17280,14592) |

As shown in Table 1, upstream and downstream FEC algorithms in the PON access technologies in different modes are usually not identical. For example, as required by the G.987.3 standard corresponding to the XGPON, downstream FEC is mandatorily enabled by the RS(248,216) algorithm, and upstream FEC is allowed to be turned on or off by the RS(248,232) algorithm; as required by the G.9807.1 standard corresponding to the XGSPON, downstream FEC is mandatorily enabled by the RS(248,216) algorithm, and upstream FEC is allowed to be enabled or disenabled by the RS(248,216) algorithm; and as required by the G.9804.2 standard corresponding to the 50GPON, downstream FEC is mandatorily enabled by the RSLDPC(17280,14592) algorithm, and upstream FEC is allowed to be turned on or off by the LDPC(17280,14592) algorithm.

In the relevant standards, the upstream FEC algorithms and the downstream FEC algorithms of the PON system are relatively fixed, which restricts improvement in user experience.

### SUMMARY

The embodiments of the present disclosure provide a communication control method applied to an OLT, a communication control method applied to an ONU, an OLT, an ONU, and a computer-readable medium.

In a first aspect, an embodiment of the present disclosure provides a communication control method applied to an OLT, including: receiving an FEC code capability set reported by an ONU; issuing a binding strategy to the ONU according to the FEC code capability set, the binding strategy representing a binding relationship between an FEC code in the FEC code capability set and a burst profile index; and instructing the ONU to perform FEC code switching.

In some embodiments, receiving the FEC code capability set reported by the ONU includes: receiving a first message sent from the ONU to acquire the FEC code capability set, wherein the first message carries FEC code capability information, which represents at least one FEC code supported by the ONU.

In some embodiments, the first message is any one of a private Physical Layer Operations, Administration and Maintenance (PLOAM) message, a private ONU Management and Control Interface (OMCI) message, and a Serial_Number_ONU message.

In some embodiments, the first message is the Serial_Number_ONU message, and at least one of a 4^{th} bit to a 7^{th} bit in a 37^{th} byte of the Serial_Number_ONU message is used as a code capability indicator carrying the FEC code capability information, each bit in the code capability indicator corresponds to one FEC code, and a value of each bit indicates whether the ONU supports a corresponding FEC code.

In some embodiments, issuing the binding strategy to the ONU according to the FEC code capability set includes: determining the binding strategy according to the FEC code capability set; and issuing the binding strategy to the ONU via a second message.

In some embodiments, the second message includes a burst profile index field and an FEC CODE Identifier, a value of the burst profile index field represents the burst profile index, and a value of the FEC CODE Identifier represents an identification of the FEC code bound to the burst profile index.

In some embodiments, the second message is a Burst_Profile message, and a 2^{nd} bit and/or a 3^{rd} bit in a 6^{th} byte of the Burst_Profile message are/is used as the FEC CODE Identifier.

In some embodiments, the Burst_Profile message further includes an Upstream FEC indicator, and a value of the Upstream FEC indicator indicates whether the FEC CODE Identifier is effective.

In some embodiments, issuing the binding strategy to the ONU via the second message includes: sending the second message in a unicast mode and/or a multicast mode to issue the binding strategy to the ONU.

In some embodiments, wherein instructing the ONU to perform FEC code switching includes: judging whether the ONU needs to perform FEC code switching; and responsive to determining that the ONU needs to perform FEC code switching, instructing, via a third message, the ONU to switch to a target FEC code.

In some embodiments, the third message is any one of a private PLOAM message, a private OMCI message, a downstream frame PIT field, and an upstream frame BWmap field.

In some embodiments, the third message includes a burst profile indicator, and a value of the burst profile indicator represents a burst profile index bound to the target FEC code.

In some embodiments, the third message includes a target FEC CODE Identifier, and a value of the target FEC CODE Identifier represents an identification of the target FEC code.

In some embodiments, determining whether the ONU needs to perform FEC code switching includes: judging whether the ONU needs to switch a downstream FEC code; and/or judging whether the ONU needs to switch an upstream FEC code.

In some embodiments, responsive to determining that the ONU needs to switch a downstream FEC code, the third message is the downstream frame PIT field, at least two bits of reserved bits in the downstream frame PIT field are used as a target FEC CODE Identifier, and a value of the target FEC CODE Identifier represents an identification of the target FEC code.

In some embodiments, responsive to determining that the ONU needs to switch an upstream FEC code, the third message is the upstream frame BWmap field, and a value of a burst profile indicator included in the upstream frame BWmap field represents a burst profile index bound to the target FEC code.

In a second aspect, an embodiment of the present disclosure provides a communication control method applied to an ONU, including: reporting an FEC code capability set; receiving a binding strategy issued by an OLT, the binding strategy representing a binding relationship between an FEC code in the FEC code capability set and a burst profile index; and performing FEC code switching according to an instruction of by the OLT.

In some embodiments, reporting the FEC code capability set includes: reporting the FEC code capability set via a first message, wherein the first message carries FEC code capability information, which represents at least one FEC code supported by the ONU.

In some embodiments, the first message is any one of a private PLOAM message, a private OMCI message, and a Serial_Number_ONU message.

In some embodiments, the first message is the Serial_Number_ONU message, and at least one of a 4^{th} bit to a 7^{th} bit in a 37^{th} byte of the Serial_Number_ONU message is used as a code capability indicator which carries the FEC code capability information, each bit in the code capability indicator corresponds to one FEC code, and the value of each bit indicates whether the ONU supports a corresponding FEC code.

In some embodiments, receiving the binding strategy issued by the OLT includes: receiving a second message to acquire the binding strategy, the second message including a burst profile index field and an FEC CODE Identifier, a value of the burst profile index field representing the burst profile index, and a value of the FEC CODE Identifier representing an identification of the FEC code bound to the burst profile index.

In some embodiments, the second message is a Burst_Pofile message, and a 2^{nd} bit and/or a 3^{rd} bit in a 6^{th} byte of the Burst_Pofile message are/is used as the FEC CODE Identifier.

In some embodiments, the Burst_Profile message further includes an Upstream FEC indicator; and receiving the binding strategy issued by the OLT further includes: determining whether the FEC CODE Identifier is effective according to a value of the Upstream FEC indicator; and responsive to determining that the FEC CODE Identifier is effective, determining the binding relationship between the FEC code and the burst profile index according to the value of the burst profile index field and the value of the FEC CODE Identifier.

In some embodiments, receiving the second message to acquire the binding strategy includes: responsive to determining that the second message sent in a unicast mode and the second message sent in a broadcast mode are received and the value of the burst profile index field of the second message sent in the unicast mode is the same as the value of the burst profile index field of the second message sent in the broadcast mode, acquiring the binding strategy according to the second message sent in the unicast mode.

In some embodiments, performing FEC code switching as instructed by the OLT includes: receiving a third message; and switching to a target FEC code according to the third message.

In some embodiments, switching to the target FEC code according to the third message includes: switching a downstream FEC code to the target FEC code according to the third message; or switching an upstream FEC code to the target FEC code according to the third message.

In some embodiments, the third message includes a burst profile indicator; and switching to the target FEC code according to the third message includes: acquiring a value of the burst profile indicator; and determining the target FEC code according to a burst profile index represented by the value of the burst profile indicator and the binding strategy, and switching to the target FEC code.

In some embodiments, the third message includes a target FEC CODE Identifier; and switching to the target FEC code according to the third message includes: acquiring a value of the target FEC CODE Identifier; and determining the target FEC code according to the value of the target FEC CODE Identifier, and switching to the target FEC code.

In some embodiments, the third message is any one of a private PLOAM message, a private OMCI message, a downstream frame PIT field, and an upstream frame BWmap field.

In some embodiments, the third message is the downstream frame PIT field, at least two bits of reserved bits in the downstream frame PIT field are used as a target FEC CODE Identifier, and a value of the target FEC CODE Identifier represents an identification of the target FEC code.

In some embodiments, the third message is the upstream frame BWmap field, and a value of a burst profile indicator included in the upstream frame BWmap field represents a burst profile index bound to the target FEC code.

In a third aspect, an embodiment of the present disclosure provides an OLT, including: at least one processor; and a storage device having stored thereon at least one program which, when executed by the at least one processor, causes the at least one processor to perform the communication control method described in the first aspect of the embodiments of the present disclosure.

In a fourth aspect, an embodiment of the present disclosure provides an ONU, including: at least one processor; and a storage device having stored thereon at least one program which, when executed by the at least one processor, causes the at least one processor to perform the communication control method described in the second aspect of the embodiments of the present disclosure.

In a fifth aspect, an embodiment of the present disclosure provides a computer-readable medium having stored thereon a computer program which, when executed by a processor, implements the communication control method described in the first aspect of the embodiments of the present disclosure and/or the communication control method described in the second aspect of the embodiments of the present disclosure.

In the embodiments of the present disclosure, the ONU can report the FEC code capability set to the OLT, the OLT can determine, according to the FEC code capability set reported by the ONU, the binding strategy for binding the FEC code supported by the ONU to the burst profile index, and issue the binding strategy to the ONU. On such basis, the OLT can instruct the ONU to perform FEC code switching, thereby realizing adaptive FEC switching of a PON system, improving communication quality in the PON system, meeting communication requirements of different service scenarios, and improving user experience.

### BRIEF DESCRIPTION OF DRAWINGS

FIG. 1 is a flowchart illustrating a communication control method according to an embodiment of the present disclosure;
FIG. 2 is a flowchart illustrating a communication control method according to an embodiment of the present disclosure;
FIG. 3 is a block diagram of an OLT according to an embodiment of the present disclosure;
FIG. 4 is a block diagram of an ONU according to an embodiment of the present disclosure;
FIG. 5 is a block diagram of a computer-readable medium according to an embodiment of the present disclosure;
FIG. 6 is a schematic diagram of an upstream frame BWmap field according to an embodiment of the present disclosure;
FIG. 7 is another schematic diagram of an upstream frame BWmap field according to an embodiment of the present disclosure;
FIG. 8 is still another schematic diagram of an upstream frame BWmap field according to an embodiment of the present disclosure;
FIG. 9 is yet another schematic diagram of an upstream frame BWmap field according to an embodiment of the present disclosure;
FIG. 10 is a schematic diagram of a downstream frame PIT field according to an embodiment of the present disclosure;
FIG. 11 is another schematic diagram of a downstream frame PIT field according to an embodiment of the present disclosure; and
FIG. 12 is a schematic diagram of an adaptive FEC switching process of a PON system.

### DETAIL DESCRIPTION OF EMBODIMENTS

In order to enable those of ordinary skill in the art to better understand the technical solutions of the present disclosure, a communication control method applied to an OLT, a communication control method applied to an ONU, an OLT, an ONU, and a computer-readable medium provided by the present disclosure are described in detail below with reference to the drawings.

Exemplary embodiments of the present disclosure will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

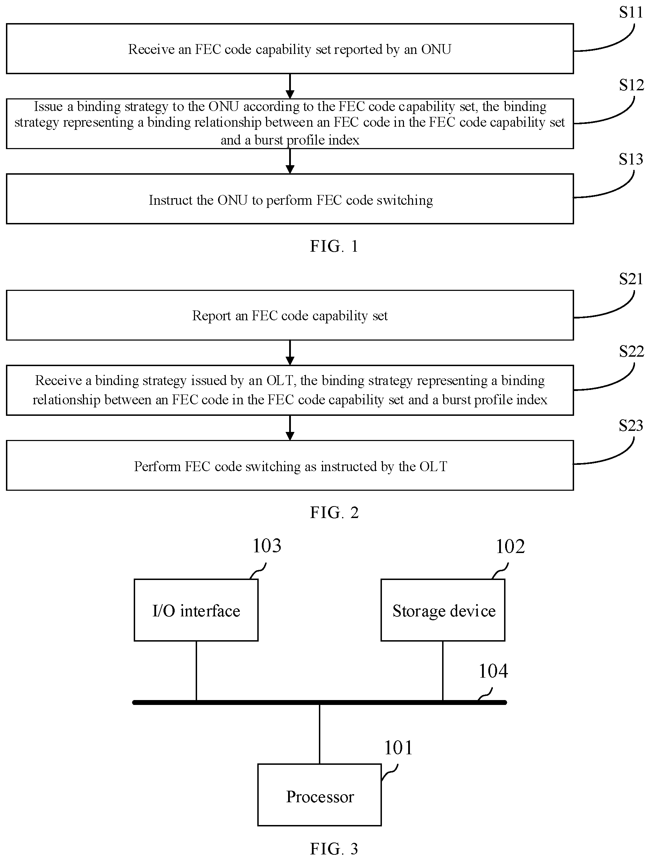

In a first aspect, referring to FIG. 1, an embodiment of the present disclosure provides a communication control method applied to an OLT, including:
S11, receiving an FEC code capability set reported by an ONU;
S12, issuing a binding strategy to the ONU according to the FEC code capability set, the binding strategy representing a binding relationship between an FEC code in the FEC code capability set and a burst profile index; and
S13, instructing the ONU to perform FEC code switching.

In the embodiments of the present disclosure, the ONU notifies the OLT of a supported FEC code by reporting the FEC code capability set, the FEC code supported by the ONU is an FEC algorithm supported by the ONU, and the FEC code capability set includes at least one FEC code supported by the ONU.

In the embodiments of the present disclosure, the ONU may support one or more FEC codes, which is not particularly limited in the embodiments of the present disclosure. For example, the ONU supports a default FEC CODE. It should be noted that the ONU supporting a certain FEC code refers to that the ONU supports encoding and decoding capabilities of the FEC code and can perform FEC decoding or FEC encoding using the FEC code.

The FEC code is not particularly limited in the embodiments of the present disclosure. For example, the FEC code may be a high-throughput FEC code, a high-yield FEC code, or other types of FEC codes.

In the embodiments of the present disclosure, the OLT issues the binding strategy to the ONU to bind the FEC code supported by the ONU to the burst profile index. How to bind the FEC code supported by the ONU to the burst profile index is not particularly limited in the embodiments of the present disclosure. For example, when the ONU merely supports the default FEC CODE, FEC CODE 0 represents the default FEC CODE, and part or all of Burst Profile Index 0 to Burst Profile Index 3 may be bound to FEC CODE 0; and when the ONU supports a plurality of FEC codes, for example, the ONU supports four FEC codes, namely FEC CODE 0 to FEC CODE 3, Burst Profile Index 0 to Burst Profile Index 3 may be bound to FEC CODE 0 to FEC CODE 3, respectively.

The embodiments of the present disclosure do not particularly limit how the OLT instructs the ONU to perform FEC code switching. For example, the OLT instructs the ONU to switch to the high-throughput FEC code in a case where receiving sensitivity of the ONU is satisfied, so as to satisfy throughput requirements of a PON system; or the OLT instructs the ONU to switch to the high-yield FEC code in a case where the receiving sensitivity of the ONU is satisfied, so as to improve receiving sensitivity yield of the PON system; or the OLT instructs the ONU to switch to other types of FEC codes.

In the communication control method according to the embodiments of the present disclosure, the OLT can receive the FEC code capability set reported by the ONU, determine, according to the FEC code capability set, the binding strategy for binding the FEC code supported by the ONU to the burst profile index, and issue the binding strategy to the ONU. On such basis, the OLT can instruct the ONU to perform FEC code switching, thereby realizing adaptive FEC switching of the PON system, improving communication quality in the PON system, meeting communication requirements of different service scenarios, and improving user experience.

The embodiments of the present disclosure do not particularly limit how the ONU reports the FEC code capability set and how the OLT receives the FEC code capability set reported by the ONU.

In some embodiments, the ONU reports the FEC code capability set via a first message.

Accordingly, in some embodiments, receiving the FEC code capability set reported by the ONU includes:
receiving the first message sent from the ONU to acquire the FEC code capability set, the first message carrying FEC code capability information, which represents at least one FEC code supported by the ONU.

The embodiments of the present disclosure do not particularly limit the FEC code capability information carried in the first message. In some embodiments, the FEC code capability information carried in the first message includes an identification of one FEC code supported by the ONU or identifications of more than one FEC code supported by the ONU. In some embodiments, a code capability indicator for carrying the FEC code capability information is defined in the first message, and includes at least one bit, each bit corresponds to one FEC code, and a value of each bit indicates whether the ONU supports the corresponding FEC code.

The embodiments of the present disclosure do not particularly limit the first message.

In some embodiments, the first message is any one of a private PLOAM message, a private OMCI message, and a Serial_Number_ONU message.

It should be noted that, in the embodiments of the present disclosure, when the ONU reports the FEC code capability set with the private PLOAM message or the private OMCI message, a location and a length of a field for carrying the FEC code capability information may be set arbitrarily, which is not particularly limited in the embodiments of the present disclosure.

In some embodiments, the first message is the Serial_Number_ONU message, and at least one of the 4^{th} bit to the 7^{th} bit in the 37^{th} byte of the Serial_Number_ONU message is used as the code capability indicator which carries the FEC code capability information, each bit in the code capability indicator corresponds to one FEC code, and a value of each bit indicates whether the ONU supports the corresponding FEC code.

The embodiments of the present disclosure do not particularly limit definitions of the 4^{th} bit to the 7^{th} bit in the 37^{th} byte of the Serial_Number_ONU message. In some embodiments, the Serial_Number_ONU message is defined as shown in Table 2.

**Table 2**

| **Octet** | **Content** | | **Description** |
|---|---|---|---|
| 1-2 | ONU-ID | | 0x03FF, Unassigned ONU-ID; or in case of an ONU with multiple PON interfaces undergoing activation on the second and subsequent PON interfaces, the ONU-ID previously assigned to the pilot PON interface, which has been activated first. |
| 3 | Message type ID | | 0x01, "Serial_Number_ONU" |
| 4 | SeqNo | | Set to 0x00 for all instances of Serial_Number_ONU PLOAM message. |
| 5-8 | Vendor_ID | | See clause 11.2.6.1. |
| 9-12 | VSSN | | See clause 11.2.6.2. |
| 13-16 | Random_delay | | The random delay used by the ONU when sending this message, expressed in time quanta. |
| 17-18 | Correlation tag | | See clause 11.2.6.3. |
| 19-22 | Current downstream PON-ID | | The PON-ID received by the ONU in its current downstream wavelength channel. |
| 23-26 | Current upstream PON-ID | | The PON-ID of the Channel_Profile message containing the descriptor of the upstream wavelength channel in which the ONU is transmitting. |
| 27-34 | Calibration record status | | See clause 11.2.6.4. |
| 35 | Tuning granularity | | See clause 11.2.6.5. |
| 36 | One-step tuning time | | See clause 11.2.6.6. |
| 37 | Upstream line rate and fec code capability | A bitmap of the form 00DE ABCL indicating the ONU's upstream fec code capability and nominal line rate capability | |
| | | fec code capability: | |
| | | D-FEC code 1 support : | |
| | | D=1: ONU supports FEC code 1. | |
| | | | D=0: ONU does not support FEC code 1. |
| | | E-FEC code 2 support : | |
| | | E=1: ONU supports FEC code 2. | |
| | | | E=0: ONU does not support FEC code 2. |
| | | nominal line rate capability: | |
| | | A-Upstream nominal line rate *ρ*₀ ∥_{□} | |
| | | A=0: not supported; | |
| | | A=1: supported. | |
| | | B-Upstream nominal line rate *ρ*₀ ∥_{□} | |
| | | B=0: not supported; | |
| | | B=1: supported. | |
| | | C-Upstream nominal line rate *ρ*₀ ∥_{□} | |
| | | C=0: not supported; | |
| | | C=1: supported. | |
| | | L-reserved, set as 0 by transmitter. | |
| ... | ... | ... | |

For example, there are four FEC codes, namely FEC CODE 1, FEC CODE 2, FEC CODE 3, and FEC CODE 4, a value of bit 4 indicates whether the ONU supports FEC CODE 1, a value of bit 5 indicates whether the ONU supports FEC CODE 2, a value of bit 6 indicates whether the ONU supports FEC CODE 3, and a value of bit 7 indicates whether the ONU supports FEC CODE 4. How each bit in the code capability indicator indicates whether the ONU supports the corresponding FEC code is not particularly limited in the embodiments of the present disclosure. For example, when the value of bit 4 is 1, it is indicated that the ONU supports FEC CODE 1; and when the value of bit 4 is 0, it is indicated that the ONU does not support FEC CODE 1.

It should be noted that bit 4 to bit 7 in the 37^{th} byte of the Serial_Number_ONU message are not clearly defined in the relevant standards, and using at least one of bit 4 to bit 7 in the 37^{th} byte of the Serial_Number_ONU message as the code capability indicator is favorable for compatibility with the relevant standards and facilitates improvement in the compatibility.

The embodiments of the present disclosure do not particularly limit how the OLT issues the binding strategy to the ONU.

In some embodiments, the issuing of the binding strategy to the ONU according to the FEC code capability set includes: determining the binding strategy according to the FEC code capability set; and issuing the binding strategy to the ONU via a second message.

It should be noted that the OLT determining the binding strategy according to the FEC code capability set refers to that the OLT binds the FEC code supported by the ONU to the burst profile index according to the FEC code supported by the ONU.

The embodiments of the present disclosure do not particularly limit how the OLT issues the binding strategy to the ONU via the second message.

In some embodiments, the second message includes a burst profile index field and an FEC CODE Identifier, a value of the burst profile index field represents the burst profile index, and a value of the FEC CODE Identifier represents an identification of the FEC code bound to the burst profile index.

In the embodiments of the present disclosure, the burst profile index field and the FEC CODE Identifier in the second message may be in a one-to-one relationship, a one-to-many relationship, or a many-to-many relationship, which is not particularly limited in the embodiments of the present disclosure.

The embodiments of the present disclosure do not particularly limit the second message.

In some embodiments, the OLT determining the binding strategy according to the FEC code capability set is the OLT determining a Burst_Profile message delivery strategy.

Accordingly, in some embodiments, the second message is a Burst_Profile message, and the 2^{nd} bit and/or the 3^{rd} bit in the 6^{th} byte of the Burst_Profile message are/is used as the FEC CODE Identifier.

It should be noted that the Burst_Profile message includes a bit for carrying the burst profile index in the relevant standards. In the embodiments of the present disclosure, bit 2 and/or bit 3 in the 6^{th} byte of the Burst_Profile message are/is defined as the FEC CODE Identifier, and the value of the FEC CODE Identifier represents the FEC code bound to the burst profile index carried by the Burst_Profile message.

The embodiments of the present disclosure do not particularly limit how to define bit 2 and/or bit 3 in the 6^{th} byte of the Burst_Profile message as the FEC CODE Identifier. For example, bit 2 and bit 3 in the 6^{th} byte of the Burst_Profile message are combined into the FEC CODE Identifier, the FEC CODE Identifier represents FEC CODE 0 when the value thereof is 00, the FEC CODE Identifier represents FEC CODE 1 when the value thereof is 01, the FEC CODE Identifier represents FEC CODE 2 when the value thereof is 10, and the FEC CODE Identifier represents FEC CODE 3 when the value thereof is 11.

It should be noted that bit 2 and bit 3 in the 6^{th} byte of the Burst_Profile message are not clearly defined in the relevant standards. In the embodiments of the present disclosure, defining bit 2 and/or bit 3 in the 6^{th} byte of the Burst_Profile message as the FEC CODE Identifier is favorable for compatibility with the relevant standards and facilitates improvement in the compatibility.

In some embodiments, the Burst_Profile message is defined as shown in Table 3.

**Table 3**

| **Octet** | **Content** | **Description** |
|---|---|---|
| 1-2 | ONU-ID | Directed message to one ONU or broadcast message to all ONUs. As a broadcast to all ONUs, ONU-ID=0x03FF. |
| 3 | Message type ID | 0x01, "Burst_Profile". |
| 4 | SeqNo | Eight-bit unicast or broadcast PLOAM sequence number, as appropriate. |
| 5 | Burst profile control 1 | An octet of the form VVVB BBPP, where: |
| | | VVV-Three-bit burst profile version. If the content of the burst profile changes, the OLT CT should ensure that the version also changes, so that the ONU can detect updates solely on the basis of the version field. |
| | | BBB-Codepoint indicating the applicability of the message to specific upstream line rates. The codepoints are specified in the applicable PMD Recommendations. |
| | | PP-Two-bit burst profile index. |
| 6 | Burst profile control 2 | NNMM EECF, where: |
| | | NN-Total number of PSBu segments minus 1, range 0..3. |
| | | MM-zero-based contiguous PSBu segment sequence number, range 0..3. PSBu segments transmitted on the optical channel will be concatenated in the order provided by this field, where zero corresponds to the PSBu segment transmitted first. |
| | | EE-FEC code identifier. |
| | | If the Upstream FEC indication is 0x01 (FEC on), the FEC code identifier indicates the FEC code that the ONU must use for upstream. If ONU receive both broadcast message and directed message, use FEC code identifier of directed message first. |
| | | 00-FEC code 0 (default FEC code). |
| | | 01-FEC code 1 selected. |
| | | 10-FEC code 2 selected. |
| | | 11- Other values are reserved by ITU-T. |
| | | C-Cross-channel burst profile indicator (TWDM only) |
| | | C=0: The burst profile is applicable to this channel |
| | | C=1: The burst profile is applicable as if it was transmitted in the downstream wavelength channel identified by Downstream PON ID provided by octets 35-38 of this message. |
| | | F-Upstream FEC indication: |
| | | F=1: FEC on; |
| | | F=0: FEC off. |
| | | R-reserved, set to 0 by the transmitter. |
| | | The content of this field must be treated as "don't care" by the receiver in case MM≠MN. |
| ... | ... | ... |

In some embodiments, the Burst_Profile message further includes an Upstream FEC indicator, and a value of the Upstream FEC indicator indicates whether the FEC CODE Identifier is effective.

For example, the value of the Upstream FEC indicator being 1 indicates FEC on, that is, the FEC CODE Identifier is effective; and the value of the Upstream FEC indicator being 0 indicates FEC off, that is, the FEC CODE Identifier is not effective.

In some embodiments, issuing the binding strategy to the ONU via the second message includes: sending the second message in a unicast mode and/or a multicast mode to issue the binding strategy to the ONU.

In some embodiments, a priority level of an FEC CODE Identifier of a unicast Burst_Profile message is higher than that of an FEC CODE Identifier of a multicast Burst_Profile message.

The embodiments of the present disclosure do not particularly limit how the OLT instructs the ONU to perform FEC code switching.

In some embodiments, instructing the ONU to perform FEC code switching includes: determining whether the ONU needs to perform FEC code switching; and in a case where the ONU needs to perform FEC code switching, instructing, via a third message, the ONU to switch to a target FEC code.

The embodiments of the present disclosure do not particularly limit how the OLT determines whether the ONU needs to perform FEC code switching. In some embodiments, the OLT determines whether FEC code switching needs to be performed according to a service scenario, and determines an FEC code switching strategy. For example, when receiving sensitivities of all ONUs cannot be satisfied, the ONU is instructed to switch to the high-yield FEC code; and when the receiving sensitivities of all the ONUs are satisfied and a traffic flow is relatively large, the ONU is instructed to switch to the high-throughput FEC code.

The embodiments of the present disclosure do not particularly limit the third message.

In some embodiments, the third message is any one of a private PLOAM message, a private OMCI message, a downstream frame PIT field, and an upstream frame BWmap field.

In some embodiments, the third message includes a burst profile indicator, and a value of the burst profile indicator represents a burst profile index bound to the target FEC code.

In some embodiments, the third message includes a target FEC CODE Identifier, and a value of the target FEC CODE Identifier represents an identification of the target FEC code.

It should be noted that, in the embodiments of the present disclosure, when the OLT instructs the ONU to perform FEC code switching with the private PLOAM message or the private OMCI message, a location and a length of the burst profile indicator or the target FEC CODE Identifier may be set arbitrarily, which is not particularly limited in the embodiments of the present disclosure.

In the embodiments of the present disclosure, the OLT may instruct the ONU to switch a downstream FEC code, may instruct the ONU to switch an upstream FEC code, or may instruct the ONU to switch the downstream FEC code and the upstream FEC code at the same time.

Accordingly, in some embodiments, determining whether the ONU needs to perform FEC code switching includes: judging whether the ONU needs to switch the downstream FEC code; and/or judging whether the ONU needs to switch the upstream FEC code.

In some embodiments, in a case where the ONU needs to switch the downstream FEC code, the third message is the downstream frame PIT field, at least two bits of reserved bits in the downstream frame PIT field are used as the target FEC CODE Identifier, and the value of the target FEC CODE Identifier represents the identification of the target FEC code.

In some embodiments, the downstream frame PIT field is configured to notify the ONU to switch the downstream FEC code.

In some embodiments, in a case where the ONU needs to switch the upstream FEC code, the third message is the upstream frame BWmap field, and the value of the burst profile indicator included in the upstream frame BWmap field represents the burst profile index bound to the target FEC code.

In some embodiments, the upstream frame BWmap field is configured to notify the ONU to s[0109]witch the upstream FEC code.

In a second aspect, referring to FIG. 2, an embodiment of the present disclosure provides a communication control method applied to an ONU, including:
S21, reporting an FEC code capability set;
S22, receiving a binding strategy issued by an OLT, the binding strategy representing a binding relationship between an FEC code in the FEC code capability set and a burst profile index; and
S23, performing FEC code switching according to an instruction of the OLT.

In the embodiments of the present disclosure, the ONU notifies the OLT of a supported FEC code by reporting the FEC code capability set, the FEC code supported by the ONU is an FEC algorithm supported by the ONU, and the FEC code capability set includes at least one FEC code supported by the ONU.

In the embodiments of the present disclosure, the ONU may support one or more FEC codes, which is not particularly limited in the embodiments of the present disclosure. For example, the ONU supports a default FEC CODE. It should be noted that the ONU supporting a certain FEC code refers to that the ONU supports encoding and decoding capabilities of the FEC code and can perform FEC decoding or FEC encoding using the FEC code.

The embodiments of the present disclosure do not particularly limit the FEC code. For example, the FEC code may be a high-throughput FEC code, a high-yield FEC code, or other types of FEC codes.

In some embodiments, the ONU typically supports the default FEC CODE, and the ONU reports the FEC code capability set when supporting other FEC codes than the default FEC CODE.

In the embodiments of the present disclosure, the ONU may receive the binding strategy issued by the OLT, and bind the FEC code supported by the ONU to a burst profile index.

In the embodiments of the present disclosure, the ONU can report the FEC code capability set to the OLT, so that the OLT can determine, according to the FEC code capability set reported by the ONU, the binding strategy for binding the FEC code supported by the ONU to the burst profile index, and issue the binding strategy to the ONU. On such basis, the ONU can perform FEC code switching as instructed by the OLT, thereby realizing adaptive FEC switching of a PON system, improving communication quality in the PON system, meeting communication requirements of different service scenarios, and improving user experience.

The embodiments of the present disclosure do not particularly limit how the ONU reports the FEC code capability set and how the OLT receives the FEC code capability set reported by the ONU.

In some embodiments, reporting the FEC code capability set includes:
reporting the FEC code capability set with a first message, via the first message carrying FEC code capability information, which represents at least one FEC code supported by the ONU.

The embodiments of the present disclosure do not particularly limit the FEC code capability information carried in the first message. In some embodiments, the FEC code capability information carried in the first message includes an identification of one FEC code supported by the ONU or identifications of more than one FEC code supported by the ONU. In some embodiments, a code capability indicator for carrying the FEC code capability information is defined in the first message, and includes at least one bit, each bit corresponds to one FEC code, and a value of each bit indicates whether the ONU supports the corresponding FEC code.

The embodiments of the present disclosure do not particularly limit the first message.

In some embodiments, the first message is any one of a private PLOAM message, a private OMCI message, and a Serial_Number_ONU message.

It should be noted that, in the embodiments of the present disclosure, when the ONU reports the FEC code capability set with the private PLOAM message or the private OMCI message, a location and a length of a field for carrying the FEC code capability information may be set arbitrarily, which is not particularly limited in the embodiments of the present disclosure.

In some embodiments, the first message is the Serial_Number_ONU message, and at least one of the 4^{th} bit to the 7^{th} bit in the 37^{th} byte of the Serial_Number_ONU message is used as the code capability indicator which carries the FEC code capability information, each bit in the code capability indicator corresponds to one FEC code, and the value of each bit indicates whether the ONU supports the corresponding FEC code.

The embodiments of the present disclosure do not particularly limit definitions of bit 4 to bit 7 in the 37^{th} byte of the Serial_Number_ONU message. For example, bit 4 to bit 7 in the 37^{th} byte of the Serial_Number_ONU message are used as the code capability indicator.

It should be noted that bit 4 to bit 7 in the 37^{th} byte of the Serial_Number_ONU message are not clearly defined in the relevant standards, and using at least one of bit 4 to bit 7 in the 37^{th} byte of the Serial_Number_ONU message as the code capability indicator is favorable for compatibility with the relevant standards and facilitates improvement in the compatibility.

The embodiments of the present disclosure do not particularly limit how the OLT issues the binding strategy to the ONU and how the ONU receives the binding strategy.

In some embodiments, receiving the binding strategy issued by the OLT includes:
receiving a second message to acquire the binding strategy, the second message including a burst profile index field and an FEC CODE Identifier, a value of the burst profile index field representing the burst profile index, and a value of the FEC CODE Identifier representing an identification of the FEC code bound to the burst profile index.

In the embodiments of the present disclosure, the burst profile index field and the FEC CODE Identifier in the second message may be in a one-to-one relationship, a one-to-many relationship, or a many-to-many relationship, which is not particularly limited in the embodiments of the present disclosure.

The embodiments of the present disclosure do not particularly limit the second message.

In some embodiments, the second message is a Burst_Profile message, and the 2^{nd} bit and/or the 3^{rd} bit in the 6^{th} byte of the Burst_Profile message are/is used as the FEC CODE Identifier.

The embodiments of the present disclosure do not particularly limit how to define bit 2 and/or bit 3 in the 6^{th} byte of the Burst_Profile message as the FEC CODE Identifier. For example, bit 2 and bit 3 in the 6^{th} byte of Burst_Profile message are combined into the FEC CODE Identifier.

In some embodiments, the Burst_Profile message further includes an Upstream FEC indicator; and receiving the binding strategy issued by the OLT further includes: determining whether the FEC CODE Identifier is effective according to a value of the Upstream FEC indicator; and in a case where the FEC CODE Identifier is effective, determining the binding relationship between the FEC code and the burst profile index according to the value of the burst profile index field and the value of the FEC CODE Identifier.

For example, the value of the Upstream FEC indicator being 1 indicates FEC on, that is, the FEC CODE Identifier is effective; and the value of the Upstream FEC indicator being 0 indicates FEC off, that is, the FEC CODE Identifier is not effective.

In some embodiments, the OLT may issue the binding strategy with a unicast Burst_Profile message or a broadcast Burst_Profile message. In some embodiments, a priority level of an FEC CODE Identifier of the unicast Burst_Profile message is higher than that of an FEC CODE Identifier of the broadcast Burst_Profile message.

Accordingly, in some embodiments, receiving the second message to acquire the binding strategy includes:
in a case where a second message sent in a unicast mode and a second message sent in a broadcast mode are received and a value of a burst profile index field of the second message sent in the unicast mode is the same as a value of a burst profile index field of the second message sent in the broadcast mode, acquiring the binding strategy according to the second message sent in the unicast mode.

For example, when the ONU receives a unicast Burst_Profile message and a broadcast Burst_Profile message with respect to a same burst profile index at the same time, the ONU preferentially binds the burst profile index to an FEC code specified by an FEC CODE Identifier in the unicast Burst_Profile message.

The embodiments of the present disclosure do not particularly limit how the OLT instructs the ONU to perform FEC code switching and how the ONU performs FEC code switching are not particularly limited in the embodiments of the present disclosure.

In some embodiments, performing FEC code switching as instructed by the OLT includes: receiving a third message; and switching to a target FEC code according to the third message.

In the embodiments of the present disclosure, the OLT may instruct the ONU to switch a downstream FEC code, may instruct the ONU to switch an upstream FEC code, or may instruct the ONU to switch the downstream FEC code and the upstream FEC code at the same time.

Accordingly, in some embodiments, switching to the target FEC code according to the third message includes: switching the downstream FEC code to the target FEC code according to the third message; or switching the upstream FEC code to the target FEC code according to the third message.

The third message is not particularly limited in the embodiments of the present disclosure.

In some embodiments, the third message includes a burst profile indicator; and switching to the target FEC code according to the third message includes: acquiring a value of the burst profile indicator; and determining the target FEC code according to a burst profile index represented by the value of the burst profile indicator and the binding strategy, and switching to the target FEC code.

In some embodiments, the third message includes a target FEC CODE Identifier; and switching to the target FEC code according to the third message includes: acquiring a value of the target FEC CODE Identifier; and determining the target FEC code according to the value of the target FEC CODE Identifier, and switching to the target FEC code.

In some embodiments, the third message is any one of a private PLOAM message, a private OMCI message, a downstream frame PIT field, and an upstream frame BWmap field.

In some embodiments, the third message is the downstream frame PIT field, at least two bits of reserved bits in the downstream frame PIT field are used as the target FEC CODE Identifier, and the value of the target FEC CODE Identifier represents an identification of the target FEC code.

In some embodiments, the downstream frame PIT field is configured to notify the ONU to switch the downstream FEC code.

In some embodiments, the third message is the upstream frame BWmap field, and the value of the burst profile indicator included in the upstream frame BWmap field represents the burst profile index bound to the target FEC code.

In some embodiments, the upstream frame BWmap field is configured to notify the ONU to switch the upstream FEC code.

In a third aspect, referring to FIG. 3, an embodiment of the present disclosure provides an OLT, including:
at least one processor 101;
a storage device 102 having stored thereon one or more programs which, when executed by the at least one processor, causes the one at least one processor to perform the communication control method described in the first aspect of the embodiments of the present disclosure; and
at least one input/output (I/O) interface 103 connected between the at least one processor and the storage device and configured to enable information interaction between the at least one processor and the storage device.

The processor 101 is a device having data processing capability, and includes, but is not limited to, a Central Processing Unit (CPU); the storage device 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write) interface 103 is connected between the processor 101 and the storage device 102, is capable of enabling the information interaction between the processor 101 and the storage device 102, and includes, but is not limited to, a data bus (Bus).

In some embodiments, the processor 101, the storage device 102, and the I/O interface 103 are connected to each other through a bus 104, and then are connected to other components of a computing device.

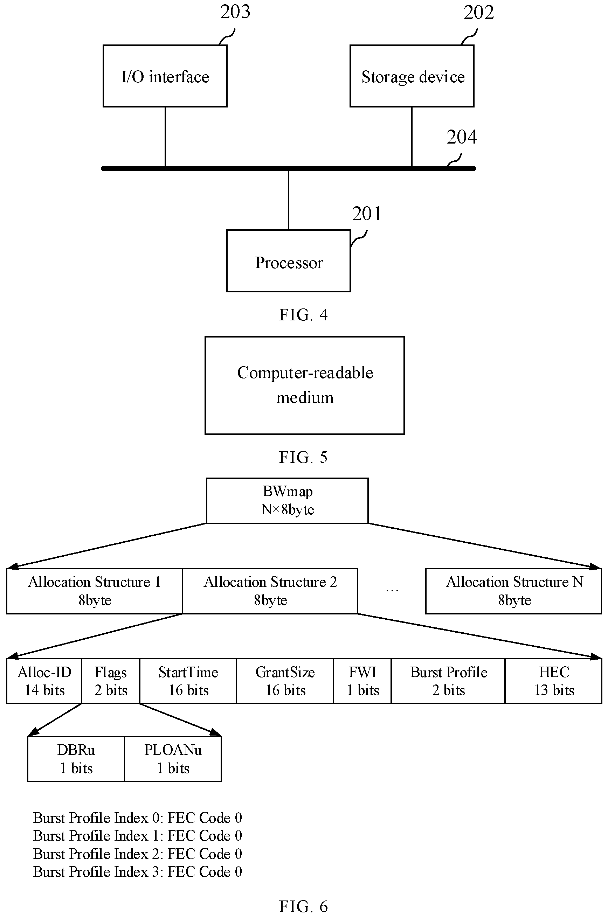

In a fourth aspect, referring to FIG. 4, an embodiment of the present disclosure provides an ONU, including:
at least one processor 201;
a storage device 202 having stored thereon at least one program which, when executed by the at least one processor, causes the one or more processors to perform the communication control method described in the second aspect of the embodiments of the present disclosure; and
at least one I/O interface 203 connected between the at least one processor and the storage device and configured to enable information interaction between the at least one processor and the storage device.

The processor 201 is a device having data processing capability, and includes, but is not limited to, a CPU; the storage device 202 is a device having data storage capability, and includes, but is not limited to, an RAM (more specifically, an SDRAM, a DDR SDRAM, etc.), an ROM, an EEPROM, and a FLASH; and the I/O interface (read/write interface) 203 is connected between the processor 201 and the storage device 202, is capable of enabling the information interaction between the processor 201 and the storage device 202, and includes, but is not limited to, a data bus (Bus).

In some embodiments, the processor 201, the storage device 202, and the I/O interface 203 are connected to each other through a bus 204, and then are connected to other components of a computing device.

In a fifth aspect, referring to FIG. 5, an embodiment of the present disclosure provides a computer-readable medium having stored thereon a computer program which, when executed by a processor, implements the communication control method described in the first aspect of the embodiments of the present disclosure and/or the communication control method described in the second aspect of the embodiments of the present disclosure.

In order to enable those of ordinary skill in the art to understand the technical solutions provided in the embodiments of the present disclosure more clearly, the technical solutions provided in the embodiments of the present disclosure are illustrated in detail below by exemplary embodiments.

### Embodiment One

In the present embodiment, a process of implementing adaptive FEC switching of the PON system is as follows:

When supporting the other FEC codes than the default FEC CODE, the ONU reports the FEC code capability set with any one of the private PLOAM message, the private OMCI message, and the Serial_Number_ONU message.

After receiving the FEC code capability set reported by the ONU, the OLT flexibly controls the binding strategy of the burst profile index and the FEC code according to the FEC code capability set, and issues the binding strategy to the ONU with the Burst_Profile message. For example, if the ONU merely supports the default FEC CODE, Burst Profile Index 0 to Burst Profile Index 3 in the Burst_Profile message issued by the OLT may be all bound to FEC CODE 0; and if the ONU supports three FEC codes, namely FEC CODE 0 to FEC CODE 2, Burst Profile Index 0 to Burst Profile Index 2 in the Burst_Profile message issued by the OLT may be bound to FEC CODE 0 to FEC CODE 2 respectively, and Burst Profile Index 3 in the Burst_Profile message issued by the OLT may be bound to FEC OFF.

According to a service scenario, the OLT instructs, with any one of the private PLOAM message, the private OMCI message, the downstream frame PIT field, and the upstream frame BWmap field, the ONU to switch the downstream FEC code or the upstream FEC code. For example, if the receiving sensitivities of all the ONUs cannot be satisfied in a downstream direction, the ONU is instructed to switch the downstream FEC code to the high-yield FEC code; if the receiving sensitivities of all the ONUs can be satisfied in the downstream direction and a downstream traffic flow is relatively large, the ONU is instructed to switch the downstream FEC code to the high-throughput FEC code; if a receiving sensitivity of the OLT cannot be satisfied in an upstream direction, the ONU is instructed to switch the upstream FEC code to the high-yield FEC code; and if the receiving sensitivity of the OLT can be satisfied in the upstream direction and an upstream traffic flow is relatively large, the ONU is instructed to switch the upstream FEC code to the high-throughput FEC code.

### Embodiment Two

In the present embodiment, a process of implementing adaptive FEC switching of the PON system is as follows:
When supporting the other FEC codes than the default FEC CODE, the ONU reports the FEC code capability set with the Serial_Number_ONU message. The 37^{th} byte of the Serial_Number_ONU message is defined as follows: for example, there are four FEC codes, namely FEC CODE 0, FEC CODE 1, FEC CODE 2, and FEC CODE 3, and in the 37^{th} byte of Serial_Number_ONU message, the value of bit 4 indicates whether the ONU supports FEC CODE 0, the value of bit 5 indicates whether the ONU supports FEC CODE 1, the value of bit 6 indicates whether the ONU supports FEC CODE 2, and the value of bit 7 indicates whether the ONU supports FEC CODE 3.

After receiving the FEC code capability set reported by the ONU, the OLT flexibly controls the binding strategy of the burst profile index and the FEC code according to the FEC code capability set, and issues the binding strategy to the ONU with the Burst_Profile message. The 6^{th} byte of the Burst_Profile message is defined as follows: bit 2 and bit 3 in the 6^{th} byte of the Burst_Profile message are combined into the FEC CODE Identifier, the value of the FEC CODE Identifier being 00 represents the default FEC CODE, the value of the FEC CODE Identifier being 01 represents FEC CODE 1, the value of the FEC CODE Identifier being 10 represents FEC CODE 2, and the value of the FEC CODE Identifier being 11 represents FEC CODE 3. The Burst_Profile message further includes the Upstream FEC indicator, and the FEC CODE Identifier is effective merely when the value of the Upstream FEC indicator is 1 (FEC on);

According to a service scenario, the OLT instructs, with the downstream frame PIT field, the ONU to switch the downstream FEC code, two bits (for example, two lower bits) in the reserved bits of the downstream frame PIT field are used as a downstream FEC CODE Identifier, and an identification of a downstream FEC code in the downstream FEC CODE Identifier is consistent with the FEC CODE Identifier in the Burst_Profile message. According to a service scenario, the OLT instructs, with the upstream frame BWmap field, the ONU to switch the upstream FEC code, and the target FEC code is determined by the FEC code bound to the burst profile index pointed by the burst profile indicator of the upstream frame BWmap field.

### Embodiment Three

As shown in FIG. 6, when the ONU merely supports the default FEC CODE, Burst Profile Index 0 to 3 in the Burst_Profile message issued by the OLT may be all bound to FEC CODE 0, and the ONU is notified to use the default FEC CODE for upstream burst through the Burst Profile indicator in the upstream frame BWmap field.

### Embodiment Four

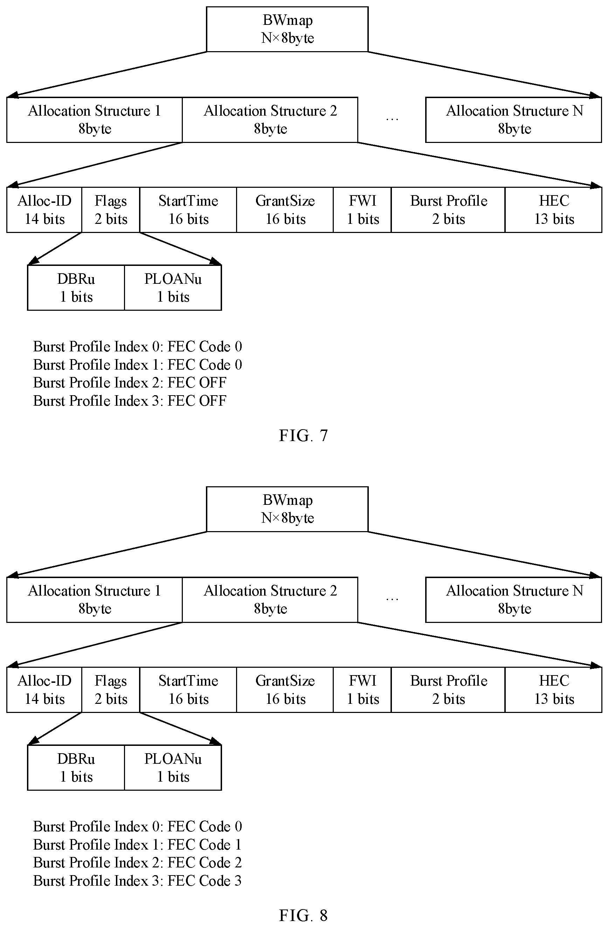

As shown in FIG. 7, when the ONU merely supports the default FEC CODE, Burst Profile Index 0 and Burst Profile Index 1 in the Burst_Profile message issued by the OLT may be bound to FEC CODE 0, Burst Profile Index 2 and Burst Profile Index 3 in the Burst_Profile message issued by the OLT may be bound to FEC OFF, and through the Burst Profile indicator of the upstream frame BWmap field, the ONU is notified to use the default FEC CODE or to disenable upstream FEC for upstream burst.

### Embodiment Five

As shown in FIG. 8, when the ONU supports four FEC codes, namely FEC CODE 0 to FEC CODE 3, Burst Profile Index 0 to Burst Profile Index 3 in the Burst_Profile message issued by the OLT may be bound to FEC CODE 0 to FEC CODE 3 respectively, and the ONU is notified of an FEC code used for upstream burst through the Burst Profile indicator of the upstream frame BWmap field.

### Embodiment Six

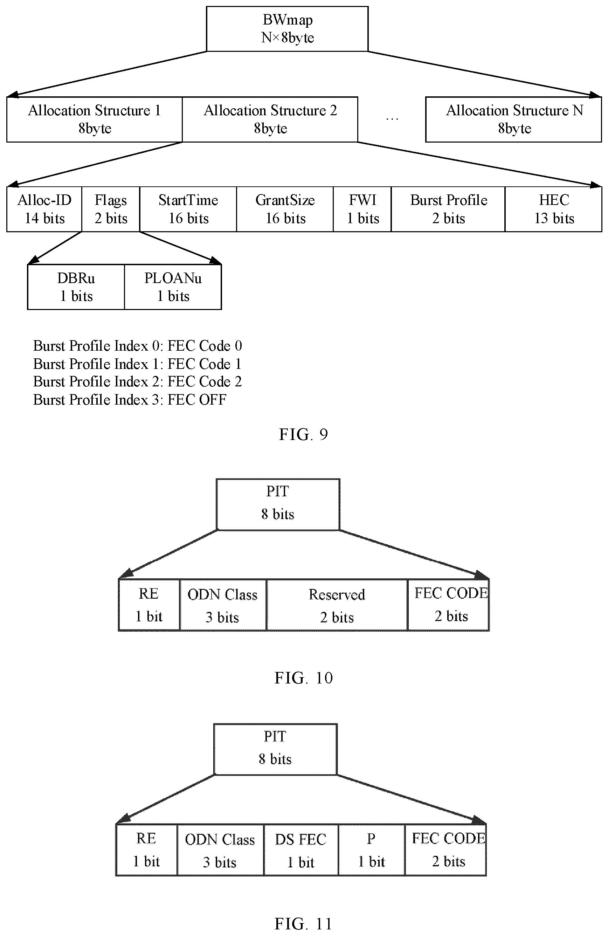

As shown in FIG. 9, when the ONU supports three FEC codes, namely FEC CODE 0 to FEC CODE 2, Burst Profile Index 0 to Burst Profile Index 2 in the Burst_Profile message issued by the OLT may be bound to FEC CODE 0 to FEC CODE 2 respectively, Burst Profile Index 3 in the Burst_Profile message issued by the OLT may be bound to FEC OFF, and through the Burst Profile indicator of the upstream frame BWmap field, the ONU is notified of an FEC code for used upstream burst or the ONU is notified to disenable upstream FEC.

### Embodiment Seven

As shown in FIG. 10, in the relevant standards, the downstream frame PIT field includes an RE indicator, an ODN Class indicator, and Reserved bits, two bits may be taken from the Reserved bits for indicating selection for the downstream FEC code, that is, the two bits may be used as the FEC CODE Identifier, and the ONU is notified of FEC encoding algorithm information for downstream frame.

### Embodiment Eight

As shown in FIG. 11, in the relevant standards, the downstream frame PIT field includes an RE indicator, an ODN Class indicator, a DS FEC indicator, a P indicator, and Reserved bits, the reserved bits may be configured to indicate selection for the downstream FEC code, that is, the reserved bits may be used as the FEC CODE Identifier, and the ONU is notified of FEC encoding algorithm information for downstream frame.

### Embodiment Nine

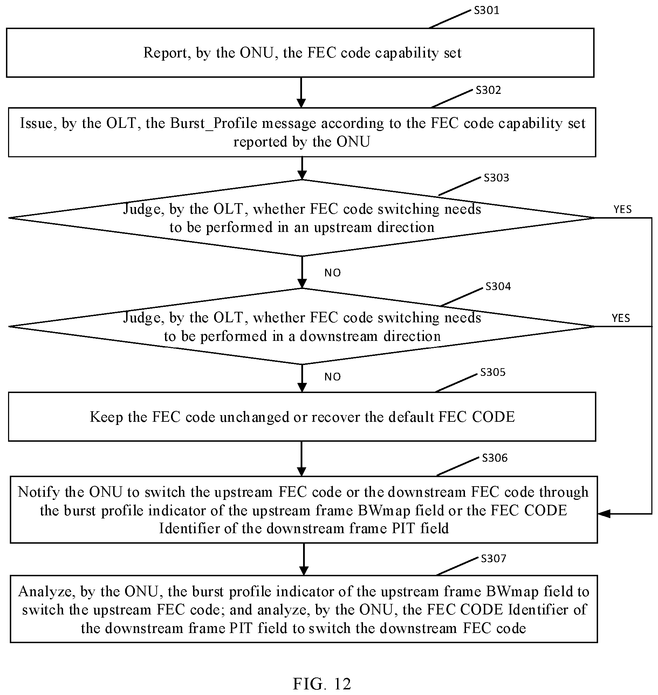

As shown in FIG. 12, in the present embodiment, a process of implementing adaptive FEC switching of the PON system includes the following operations S301 to S307.

At operation S301, the ONU reports the FEC code capability set. A reporting method may be reporting with the private PLOAM message or the private OMCI message, or reporting through the 37^{th} byte of the Serial_Number_ONU message.

At operation S302, the OLT issues the Burst_Profile message according to the FEC code capability set reported by the ONU.

At operation S303, the OLT determines whether FEC code switching needs to be performed in an upstream direction; if FEC code switching needs to be performed in the upstream direction, operation S306 is performed; and if FEC code switching does not need to be performed in the upstream direction, operation S304 is performed.

At operation S304, the OLT determines whether FEC code switching needs to be performed in a downstream direction; if FEC code switching needs to be performed in the downstream direction, operation S306 is performed; and if FEC code switching does not need to be performed in the downstream direction, operation S305 is performed.

At operation S305, the FEC code is kept unchanged or the default FEC CODE is recovered.

At operation S306, the ONU is notified to switch the upstream FEC code or the downstream FEC code through the burst profile indicator of the upstream frame BWmap field or the FEC CODE Identifier of the downstream frame PIT field.

At operation S307, the ONU analyzes the burst profile indicator of the upstream frame BWmap field to switch the upstream FEC code; and the ONU analyzes the FEC CODE Identifier of the downstream frame PIT field to switch the downstream FEC code.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A communication control method applied to an Optical Line Terminal, OLT, comprising:
receiving a Forward Error Correction, FEC, code capability set reported by an Optical Network Unit, ONU;
issuing a binding strategy to the ONU according to the FEC code capability set, the binding strategy representing a binding relationship between an FEC code in the FEC code capability set and a burst profile index; and
instructing the ONU to perform FEC code switching.

2. The method of claim 1, wherein receiving the FEC code capability set reported by the ONU comprises:
receiving a first message sent from the ONU to acquire the FEC code capability set, wherein the first message carries FEC code capability information, which represents at least one FEC code supported by the ONU.

3. The method of claim 2, wherein the first message is any one of a private Physical Layer Operations, Administration and Maintenance, PLOAM, message, a private ONU Management and Control Interface, OMCI, message, and a Serial_Number_ONU message.

4. The method of claim 3, wherein the first message is the Serial_Number_ONU message, and at least one of a 4^{th} bit to a 7^{th} bit in a 37^{th} byte of the Serial_Number_ONU message is used as a code capability indicator carrying the FEC code capability information, wherein each bit in the code capability indicator corresponds to an FEC code, and a value of each bit indicates whether the ONU supports a corresponding FEC code.

5. The method of any one of claims 1 to 4, wherein issuing the binding strategy to the ONU according to the FEC code capability set comprises:
determining the binding strategy according to the FEC code capability set; and
issuing the binding strategy to the ONU via a second message.

6. The method of claim 5, wherein the second message comprises a burst profile index field and an FEC CODE Identifier, a value of the burst profile index field represents the burst profile index, and a value of the FEC CODE Identifier represents an identification of the FEC code bound to the burst profile index.

7. The method of claim 6, wherein the second message is a Burst_Profile message, and a 2^{nd} bit and/or a 3^{rd} bit in a 6^{th} byte of the Burst_Profile message are/is used as the FEC CODE Identifier.

8. The method of claim 7, wherein the Burst_Profile message further comprises an Upstream FEC indicator, and a value of the Upstream FEC indicator indicates whether the FEC CODE Identifier is effective.

9. The method of claim 5, wherein issuing the binding strategy to the ONU via the second message comprises:
sending the second message in a unicast mode and/or a multicast mode to issue the binding strategy to the ONU.

10. The method of any one of claims 1 to 4, wherein instructing the ONU to perform FEC code switching comprises:
judging whether the ONU needs to perform FEC code switching; and
responsive to determining that the ONU needs to perform FEC code switching, instructing, via a third message, the ONU to switch to a target FEC code.

11. The method of claim 10, wherein the third message is any one of a private PLOAM message, a private OMCI message, a downstream frame PIT field, and an upstream frame BWmap field.

12. The method of claim 10, wherein the third message comprises a burst profile indicator, and a value of the burst profile indicator represents a burst profile index bound to the target FEC code.

13. The method of claim 10, wherein the third message comprises a target FEC CODE Identifier, and a value of the target FEC CODE Identifier represents an identification of the target FEC code.

14. The method of claim 10, wherein determining whether the ONU needs to perform FEC code switching comprises:
judging whether the ONU needs to switch a downstream FEC code; and/or
judging whether the ONU needs to switch an upstream FEC code.

15. The method of claim 11, wherein responsive to determining that the ONU needs to switch a downstream FEC code, the third message is the downstream frame PIT field, at least two bits of reserved bits in the downstream frame PIT field are used as a target FEC CODE Identifier, and a value of the target FEC CODE Identifier represents an identification of the target FEC code.

16. The method of claim 11, wherein responsive to determining that the ONU needs to switch an upstream FEC code, the third message is the upstream frame BWmap field, and a value of a burst profile indicator included in the upstream frame BWmap field represents a burst profile index bound to the target FEC code.

17. A communication control method applied to an ONU, comprising:
reporting an FEC code capability set;
receiving a binding strategy issued by an OLT, the binding strategy representing a binding relationship between an FEC code in the FEC code capability set and a burst profile index; and
performing FEC code switching according to an instruction of the OLT.

18. The method of claim 17, wherein reporting the FEC code capability set comprises:
reporting the FEC code capability set via a first message, wherein the first message carries FEC code capability information, which represents at least one FEC code supported by the ONU.

19. The method of claim 18, wherein the first message is any one of a private PLOAM message, a private OMCI message, and a Serial_Number_ONU message.

20. The method of claim 19, wherein the first message is the Serial_Number_ONU message, and at least one of a 4^{th} bit to a 7^{th} bit in a 37^{th} byte of the Serial_Number_ONU message is used as a code capability indicator carrying the FEC code capability information, each bit in the code capability indicator corresponds to one FEC code, and the value of each bit indicates whether the ONU supports a corresponding FEC code.

21. The method of any one of claims 17 to 20, wherein receiving the binding strategy issued by the OLT comprises:
receiving a second message to acquire the binding strategy, the second message comprising a burst profile index field and an FEC CODE Identifier, a value of the burst profile index field representing the burst profile index, and a value of the FEC CODE Identifier representing an identification of the FEC code bound to the burst profile index.

22. The method of claim 21, wherein the second message is a Burst_Pofile message, and a 2^{nd} bit and/or a 3^{rd} bit in a 6^{th} byte of the Burst_Pofile message are/is used as the FEC CODE Identifier.

23. The method of claim 22, wherein the Burst_Profile message further comprises an Upstream FEC indicator; and receiving the binding strategy issued by the OLT further comprises:
determining whether the FEC CODE Identifier is effective according to a value of the Upstream FEC indicator; and
responsive to determining that the FEC CODE Identifier is effective, determining the binding relationship between the FEC code and the burst profile index according to the value of the burst profile index field and the value of the FEC CODE Identifier.

24. The method of claim 21, wherein receiving the second message to acquire the binding strategy comprises:
responsive to determining that the second message sent in a unicast mode and the second message sent in a broadcast mode are received and the value of the burst profile index field of the second message sent in the unicast mode is the same as the value of the burst profile index field of the second message sent in the broadcast mode, acquiring the binding strategy according to the second message sent in the unicast mode.

25. The method of any one of claims 17 to 20, wherein performing FEC code switching as instructed by the OLT comprises:
receiving a third message; and
switching to a target FEC code according to the third message.

26. The method of claim 25, wherein switching to the target FEC code according to the third message comprises:
switching a downstream FEC code to the target FEC code according to the third message; or
switching an upstream FEC code to the target FEC code according to the third message.

27. The method of claim 25, wherein the third message comprises a burst profile indicator; and switching to the target FEC code according to the third message comprises:
acquiring a value of the burst profile indicator; and
determining the target FEC code according to a burst profile index represented by the value of the burst profile indicator and the binding strategy, and switching to the target FEC code.

28. The method of claim 25, wherein the third message comprises a target FEC CODE Identifier; and switching to the target FEC code according to the third message comprises:
acquiring a value of the target FEC CODE Identifier; and
determining the target FEC code according to the value of the target FEC CODE Identifier, and switching to the target FEC code.

29. The method of claim 25, wherein the third message is any one of a private PLOAM message, a private OMCI message, a downstream frame PIT field, and an upstream frame BWmap field.

30. The method of claim 29, wherein the third message is the downstream frame PIT field, at least two bits of reserved bits in the downstream frame PIT field are used as a target FEC CODE Identifier, and a value of the target FEC CODE Identifier represents an identification of the target FEC code.

31. The method of claim 29, wherein the third message is the upstream frame BWmap field, and a value of a burst profile indicator included in the upstream frame BWmap field represents a burst profile index bound to the target FEC code.

32. An OLT, comprising:
at least one processor; and
a storage device having stored thereon at least one program which, when executed by the one or more processors, causes the at least one processor to perform the communication control method of any one of claims 1 to 16.

33. An ONU, comprising:
at least one processor; and
a storage device having stored thereon at least one program which, when executed by the at least one or more processor, causes the one or more processors to perform the communication control method of any one of claims 17 to 31.

34. A computer-readable medium having stored thereon a computer program which, when executed by a processor, implements the communication control method of any one of claims 1 to 31.
